(19) Europäisches Patentamt
European Patent Office
Office européen des brevets

(11) **EP 4 682 777 A2**

(12) **EUROPEAN PATENT APPLICATION**

(43) Date of publication:
**21.01.2026 Bulletin 2026/04**

(21) Application number: **25189760.9**

(22) Date of filing: **15.07.2025**

(51) International Patent Classification (IPC):
**G06N 10/20** (2022.01)     **G06N 10/80** (2022.01)

(52) Cooperative Patent Classification (CPC):
**G06N 10/80; G06F 9/4881; G06N 10/20; G06N 10/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **19.07.2024 JP 2024115899**

(71) Applicant: **FUJITSU LIMITED
Kawasaki-shi, Kanagawa 211-8588 (JP)**

(72) Inventor: **YAMAGUCHI, Masaomi
Kawasaki-shi, Kanagawa 211-8588 (JP)**

(74) Representative: **Haseltine Lake Kempner LLP
Cheapside House
138 Cheapside
London EC2V 6BJ (GB)**

(54) **COMPUTER PROGRAM, QUANTUM JOB SCHEDULING METHOD, AND INFORMATION PROCESSING APPARATUS**

(57)     A computer acquires a first quantum job using a first number of qubits, the first quantum job having been compiled to be executable in a first pattern corresponding to the first number of qubits among a plurality of patterns corresponding to the numbers of qubits, each of the plurality of patterns defining the shape of an allocation area in a qubit area. The computer moves, upon completion of a third quantum job in the qubit area, a second quantum job to which an allocation area matching a second pattern corresponding to a second number of qubits is allocated and which uses the second number of qubits in a certain direction on the qubit area while maintaining the second pattern. The computer allocates an allocation area matching the first pattern to the first quantum job in an available area included in the qubit area after the second quantum job is moved.

FIG. 1

## Description

FIELD

The present embodiments relate to a computer program, a quantum job scheduling method, and an information processing apparatus.

BACKGROUND

A quantum gate quantum computer performs quantum computation in which one or more quantum gates act on one or more qubits. Typically, a quantum computer performs quantum computation in which two or more quantum gates act on two or more qubits. Quantum computation is usually described by quantum circuits. An information processing system including a quantum computer may receive a plurality of quantum jobs requesting quantum computation according to different quantum circuits at the same time.

A quantum processor includes a plurality of qubits having a certain adjacency relationship. Typically, a quantum processor includes a plurality of qubits arranged in a grid. A quantum computer may execute a plurality of quantum jobs in parallel on the same quantum processor by allocating different qubits to different quantum jobs. For example, there is a scheduling technique of determining a schedule of a plurality of quantum jobs waiting in a queue from the number of used qubits and an expected execution time of each quantum job by a bin packing algorithm.

There is an optimization technique for compiling a quantum program into logical assembly instructions and aggregating parallelizable logical assembly instructions into the same logical block. In addition, there is a quantum control technique of extracting a plurality of sub-quantum circuits from a quantum circuit and executing the plurality of sub-quantum circuits in parallel. In addition, there is a mapping technique for mapping a plurality of logical qubits defined in a quantum program to a plurality of physical qubits included in a quantum computer. In addition, there is a buffering technique in which a plurality of quantum circuits are coupled to one composite quantum circuit and the composite quantum circuit is mapped to a physical qubit layout of a quantum computer. See, for example, the following literatures.

International Publication Pamphlet No. WO 2020/108993
International Publication Pamphlet No. WO 2020/056176
International Publication Pamphlet No. WO 2022/217823
U.S. Patent Application Publication No. 2023/0102347
U.S. Patent Application Publication No. 2023/0186130

However, the conventional scheduling techniques collectively determine the schedule of a plurality of waiting quantum jobs. Therefore, the conventional scheduling techniques are not suitable for an information processing system that consecutively receives new quantum jobs, and there is room for improvement in efficiency of parallel execution of a plurality of quantum jobs.

SUMMARY

In one aspect, it is desirable to improve the efficiency of parallel execution of a plurality of quantum jobs.

According to one aspect, there is provided a computer program that causes a computer to execute a process including: acquiring a first quantum job using a first number of qubits, the first quantum job having been compiled such that the first quantum job is executable in a first pattern corresponding to the first number of qubits among a plurality of patterns corresponding to a plurality of numbers of qubits, each of the plurality of patterns defining a shape of an allocation area in a qubit area in which a plurality of qubits are arranged; moving, in response to completion of a third quantum job in the qubit area, a second quantum job to which an allocation area matching a second pattern corresponding to a second number of qubits among the plurality of patterns is allocated and which uses the second number of qubits in a certain direction on the qubit area while maintaining the second pattern; and allocating an allocation area matching the first pattern to the first quantum job in an available area included in the qubit area after the second quantum job is moved.

BRIEF DESCRIPTION OF DRAWINGS

The invention is described, by way of example only, with reference to the following drawings, in which:

FIG. 1 is a diagram illustrating an information processing apparatus according to a first embodiment;
FIG. 2 is a diagram illustrating an example of an information processing system according to a second embodiment;
FIG. 3 is a block diagram illustrating a hardware example of a server computer;

FIG. 4 is a block diagram illustrating a functional example of a user computer and the server computer;

FIG. 5 is a diagram illustrating an example of a quantum circuit and a change in quantum state;

FIG. 6 is a diagram illustrating an example of conversion to a quantum circuit using native quantum gates;

FIG. 7 is a diagram illustrating an example of allocation of physical qubits to logical qubits;

FIG. 8 is a diagram illustrating an example of routing using a swap gate;

FIG. 9 is a diagram illustrating an optimization example of a quantum circuit;

FIG. 10 is a diagram illustrating an example of parallel execution of a plurality of quantum jobs on a QPU;

FIG. 11 is a diagram illustrating an example of patterns based on various numbers of qubits;

FIG. 12 is a diagram illustrating an example of a quantum circuit not compiled;

FIG. 13 is a diagram illustrating an example of the first half of a quantum circuit compiled;

FIG. 14 is a diagram illustrating an example of the second half of the quantum circuit compiled;

FIG. 15 is a diagram illustrating an example of a quantum job queue;

FIG. 16 is a diagram illustrating an example of allocation of a QPU area to a quantum job;

FIG. 17 is a diagram illustrating an example of recompilation of a quantum circuit;

FIG. 18 is a diagram illustrating an example of a change in QPU area allocation;

FIG. 19 is a diagram illustrating another example of patterns based on various numbers of qubits;

FIG. 20 is a flowchart illustrating an example of a procedure of quantum job scheduling; and

FIG. 21 is a flowchart illustrating an example of a procedure of quantum job control.

## DESCRIPTION OF EMBODIMENTS

Hereinafter, embodiments will be described with reference to the drawings.

(a) First Embodiment

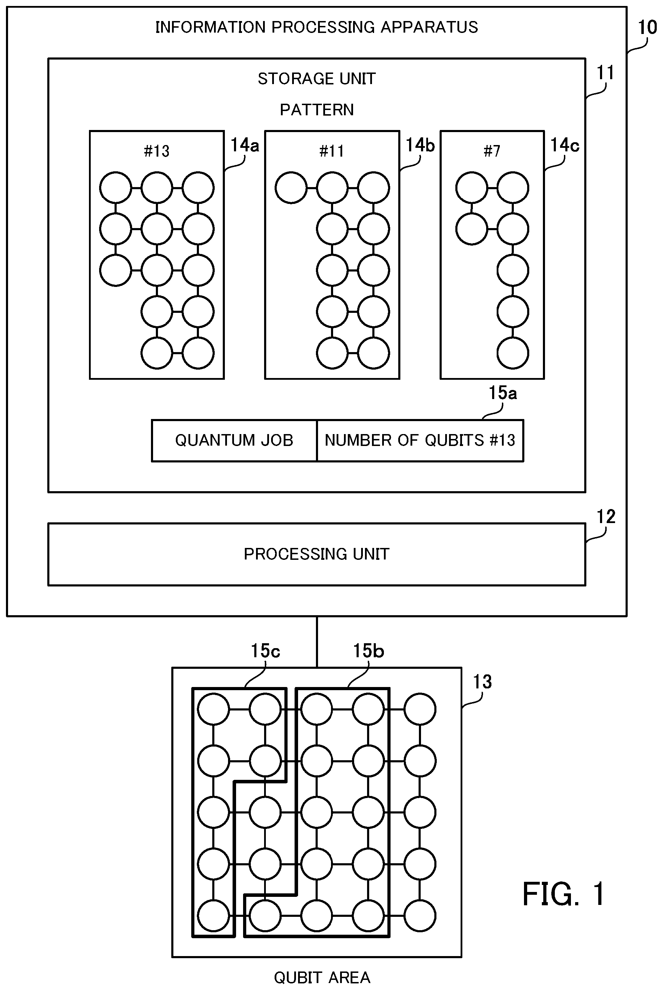

FIG. 1 is a diagram illustrating an information processing apparatus according to a first embodiment. An information processing apparatus 10 according to the first embodiment performs quantum job scheduling that enables a quantum gate quantum computer to execute a plurality of quantum jobs in parallel. The information processing apparatus 10 is a von Neumann computer and may be referred to as a classical computer. The information processing apparatus 10 may be a client apparatus or a server apparatus. The information processing apparatus 10 may be referred to as a quantum job scheduling apparatus or a job scheduler.

The information processing apparatus 10 includes a storage unit 11 and a processing unit 12. The storage unit 11 may be a volatile semiconductor memory such as a random access memory (RAM). The storage unit 11 may be a non-volatile storage such as a hard disk drive (HDD) or a flash memory.

The processing unit 12 is, for example, a processor such as a central processing unit (CPU), a graphics processing unit (GPU), or a digital signal processor (DSP). The processing unit 12 may include an electronic circuit such as an application specific integrated circuit (ASIC) or a field programmable gate array (FPGA). The processor executes, for example, a program stored in a memory such as a RAM. The processor may be referred to as processor circuitry. A set of processors may be referred to as a multiprocessor or simply as "processor". Further, a plurality of processing steps described below may be executed by different processors.

The storage unit 11 stores a quantum job 15a. The quantum job 15a indicates a request for quantum computation from a user. The quantum job 15a is a quantum job waiting for execution. The storage unit 11 may include an execution waiting queue that temporarily stores one or more quantum jobs received by the information processing apparatus 10. The quantum job 15a uses a first number of qubits. In the example in FIG. 1, the quantum job 15a uses 13 qubits.

The quantum job 15a defines quantum computation using a quantum circuit. A quantum circuit is a quantum computational model that defines a procedure for operating one or more quantum gates on one or more qubits. The qubits included in a quantum circuit are logical qubits whose physical locations within a quantum computer have not yet been determined. The first number of qubits may be determined from the quantum circuit. The quantum job 15a may specify the number of repetitions of the quantum circuit. Since the measurement value of the individual qubit is stochastically obtained, the same quantum circuit is iteratively executed a plurality of times.

Here, the quantum job 15a has already been compiled. The quantum job 15a may be compiled by the information processing apparatus 10 or another information processing apparatus such as a user computer. The compilation result depends on the shape of the allocation area allocated to the quantum job 15a.

The allocation area is a part or all of a qubit area 13 in which a plurality of qubits of the quantum computer are arranged. The qubit area 13 may be a two-dimensional plane on which a plurality of qubits included in the quantum processor are arranged. The quantum processor may be referred to as a quantum processing unit (QPU). The plurality of qubits may be arranged in a grid shape. One allocation area is usually a connected area that does not include non-connected divided areas. Two or more quantum jobs that coexist on the qubit area 13 are executed in parallel.

In many cases, a quantum computer has a restriction on whether to execute a multi-input quantum gate using two or more qubits included in the qubit area 13 as inputs according to the physical positions of the two or more qubits. For example, a two-input quantum gate may be inexecutable on two qubits that are not adjacent to each other in the qubit area 13. Therefore, a compiler may convert the quantum circuit such that the quantum gate is executable with the shape of the allocation area. For example, the compiler inserts a swap gate for swapping the quantum states between qubits into the quantum circuit such that two qubits on which the quantum gate acts are adjacent to each other.

In the first embodiment, the quantum job 15a is compiled such that the quantum job 15a is executable in a pattern 14a corresponding to the first qubit number among a plurality of patterns corresponding to a plurality of qubit numbers. The storage unit 11 may store pattern data in which a plurality of qubit numbers are associated with a plurality of patterns. When a different information processing apparatus compiles the quantum job 15a, the information processing apparatus 10 may transmit the pattern data to the different information processing apparatus, or may request the different information processing apparatus to refer to the pattern data at the time of compilation.

Each of the plurality of patterns defines the shape of an allocation area in the qubit area 13. The number of qubits corresponds to the number of qubits used by the quantum job. One pattern may be uniquely determined from one qubit number. The shapes indicated by the plurality of patterns are defined under a single policy.

For example, the plurality of patterns are defined such that the individual allocation area preferentially becomes longer in a first direction as the number of qubits increases. Accordingly, the length of the allocation area in the first direction is equal to or greater than the length in a second direction orthogonal to the first direction. FIG. 1 illustrates the pattern 14a in which the number of qubits is 13, a pattern 14b in which the number of qubits is 11, and a pattern 14c in which the number of qubits is 7. The shapes indicated by the patterns 14a, 14b, and 14c are vertically long polygons whose length in the vertical direction is greater than that in the horizontal direction.

When the quantum job 15a is waiting to be executed, quantum jobs 15b and 15c are being executed in the qubit area 13. The quantum job 15b uses a second number of qubits. An allocation area matching the pattern 14b corresponding to the second qubit number is allocated to the quantum job 15b. The quantum job 15c uses a third number of qubits. An allocation area matching the pattern 14c corresponding to the third qubit number is allocated to the quantum job 15c.

When selecting an allocation area in the qubit area 13, the processing unit 12 may invert the shapes indicated by the patterns 14b and 14c in the first direction or in the second direction orthogonal to the first direction. For example, the processing unit 12 selects a shape achieving the highest qubit use efficiency from among the four shapes by taking the inversions into account.

The processing unit 12 may select an allocation area such that fragmentary available qubits are minimized. The processing unit 12 may select an allocation area such that the number of unused columns or unused rows is maximized. In the example in FIG. 1, in the qubit area 13, the allocation area of the quantum job 15b has a shape obtained by vertically inverting the pattern 14b. The allocation area of the quantum job 15c has a shape obtained by horizontally inverting the pattern 14c.

The processing unit 12 detects completion of the quantum job 15c. The quantum job 15c is completed, for example, by iteratively executing the quantum circuit of the quantum job 15c a specified number of times. Then, the processing unit 12 moves the quantum job 15b being executed in a certain direction in the qubit area 13. The movement of the quantum job 15b indicates a change in the allocation area allocated to the quantum job 15b. This movement occurs between iterations of the quantum circuit. As a result, fragmentary available qubits are reduced, and a wide available area is generated in the qubit area 13.

The direction of the movement may depend on a policy that is applied to each of the plurality of patterns. For example, when the allocation area is preferentially elongated in the first direction, the processing unit 12 moves the quantum job 15b in the second direction. The processing unit 12 may increase the number of unused columns on the right side by moving the vertically long allocation area in the left direction, or may increase the number of unused columns on the left side by moving the vertically long allocation area in the right direction. The processing unit 12 may increase the number of unused rows on the lower side by moving the horizontally long allocation area in the upper direction, or may increase the number of unused rows on the upper side by moving the horizontally long allocation area in the lower direction.

At this time, the processing unit 12 maintains the shape of the allocation area of the quantum job 15b such that the shape matches the pattern 14b. Therefore, in principle, the processing unit 12 selects a post-movement allocation area by shifting a pre-movement allocation area in the qubit area 13. The processing unit 12 may invert the shape indicated by the pattern 14b in the first direction or in the second direction orthogonal to the first direction. For example, the processing unit 12 selects a shape such that the post-movement qubit use efficiency becomes the highest from the four shapes by taking the inversions into account.

By moving the quantum job 15b, an available area having the maximum number of available qubits is obtained in the qubit area 13. Then, the processing unit 12 allocates an allocation area matching the pattern 14a to the quantum job 15a in the available area. At this time, the processing unit 12 may compactly place the quantum job 15a in a certain direction in the qubit area 13. The processing unit 12 may invert the shape indicated by the pattern 14a in the first direction or in the second direction orthogonal to the first direction. The quantum computer executes the quantum job 15a using the qubits allocated to the quantum job 15a.

The information processing apparatus 10 may store the schedule of the plurality of quantum jobs determined by the above method in a non-volatile storage, display the schedule on a display device, or transmit the schedule to a different information processing apparatus. The different information processing apparatus may be a classical computer that controls the quantum computer having the qubit area 13. The information processing apparatus 10 may control the quantum computer in accordance with the determined schedule.

As described above, the information processing apparatus 10 according to the first embodiment acquires the quantum job 15a using the first number of qubits. The quantum job 15a is compiled such that the quantum job 15a is executable in the pattern 14a corresponding to the first number of qubits among a plurality of patterns corresponding to a plurality of numbers of qubits. Each of the plurality of patterns defines the shape of an allocation area in the qubit area 13 in which a plurality of qubits are arranged.

In response to completion of the quantum job 15c in the qubit area 13, the information processing apparatus 10 moves the quantum job 15b using the second number of qubits in a certain direction in the qubit area 13. An allocation area matching the pattern 14b corresponding to the second number of qubits among the plurality of patterns is allocated to the quantum job 15b. The information processing apparatus 10 moves the quantum job 15b while maintaining the pattern 14b. The information processing apparatus 10 allocates, to the quantum job 15a, an allocation area matching the pattern 14a in the available area included in the qubit area 13 after the quantum job 15b is moved.

In this way, two or more quantum jobs are executed in parallel in the qubit area 13. Therefore, the plurality of qubits are effectively utilized, and the throughput of the quantum computer is improved. In addition, the shape of the allocation area of each quantum job is standardized according to the number of used qubits. Therefore, the information processing apparatus 10 is able to execute scheduling for compactly placing two or more quantum jobs in the qubit area 13 by using a lightweight algorithm, and the load is consequently reduced.

In addition, fragmentary available qubits are reduced in the qubit area 13, and the throughput of the quantum computer is improved. In addition, since an individual shape that is based on its corresponding number of used qubits is maintained, a change in the adjacency relationship of the used qubits is suppressed, and recompilation of the quantum job is suppressed. Therefore, the scheduling load is reduced. In addition, in response to completion of a quantum job, the allocation areas of other quantum jobs are organized, and the available area is consequently widened. Therefore, the scheduling method of the first embodiment is also suitable for a system that consecutively receives new quantum jobs.

(b) Second Embodiment

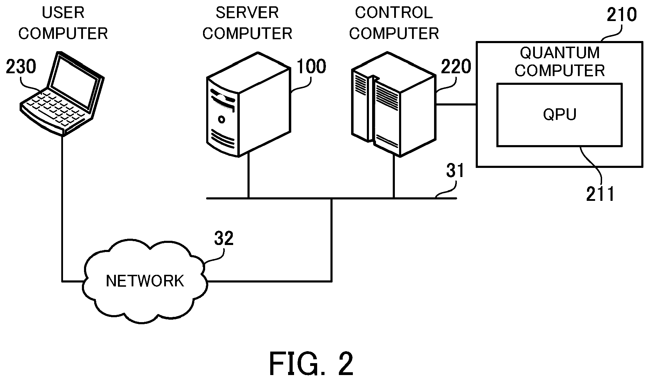

FIG. 2 is a diagram illustrating an example of an information processing system according to a second embodiment. The information processing system according to the second embodiment includes a server computer 100, a quantum computer 210, a control computer 220, and a user computer 230. The server computer 100 corresponds to the information processing apparatus 10 of the first embodiment.

The control computer 220 is connected to the quantum computer 210. The server computer 100 and the control computer 220 are connected to a network 31. The network 31 may include a local area network (LAN). The user computer 230 is connected to a network 32. The network 32 may include a wide area network such as the Internet.

The server computer 100 is a classical computer that provides a cloud service for using the quantum computer 210. The server computer 100 may be referred to as a scheduling apparatus or a scheduler. The server computer 100 receives a quantum job from the user computer 230 and determines an execution schedule of the received quantum job. The server computer 100 transmits the quantum job and the schedule to the control computer 220. The server computer 100 receives the execution result of the quantum job from the control computer 220 and transfers the execution result to the user computer 230.

The quantum computer 210 is a quantum gate quantum computer. The quantum computer 210 receives a control signal from the control computer 220 and transmits a result of quantum computation performed according to the control signal to the control computer 220.

The quantum computer 210 includes a QPU 211. The quantum computer 210 may include a plurality of QPUs. The QPU 211 is a quantum processor including a plurality of qubits. For example, the plurality of qubits are arranged in a grid shape to form a square qubit area. However, the qubits may be arranged in a shape other than a grid shape. The QPU 211 causes a state change corresponding to a quantum gate in a qubit by illuminating the qubit with a pulse wave based on to the control signal. A two-input quantum gate, such as a controlled NOT (CNOT) gate, may be implemented on adjacent qubits in the QPU 211.

The control computer 220 is a classical computer that instructs the quantum computer 210 to perform quantum computation. The control computer 220 communicates with the server computer 100 via the network 31. The control computer 220 transmits a control signal to the quantum computer 210 in accordance with a quantum job and a schedule received from the server computer 100. The control computer 220 reads the measurement value of the individual qubit from the quantum computer 210 and transfers the measurement value to the server computer 100.

The user computer 230 is a classical computer of a user who uses the cloud service. The user computer 230 accesses the server computer 100 via the networks 31 and 32. The user computer 230 receives a quantum circuit describing quantum computation from a user, compiles the quantum circuit, and transmits a quantum job including the compiled quantum circuit to the server computer 100. The user computer 230 receives the execution result of the quantum job from the server computer 100.

The quantum computer 210 and the control computer 220 may be formed as an integrated apparatus. Further, the server computer 100 and the control computer 220 may be formed as an integrated apparatus. In the second embodiment, the user computer 230 compiles the quantum circuit. Alternatively, the user computer 230 may transmit a quantum circuit not compiled, and the server computer 100 may compile the quantum circuit. In quantum gate quantum computation, "compiling a quantum job" may also refer to compiling a quantum circuit and generating a quantum job including the compiled quantum circuit. In the following description, there are cases where compilation of a quantum job is not distinguished from compilation of a quantum circuit.

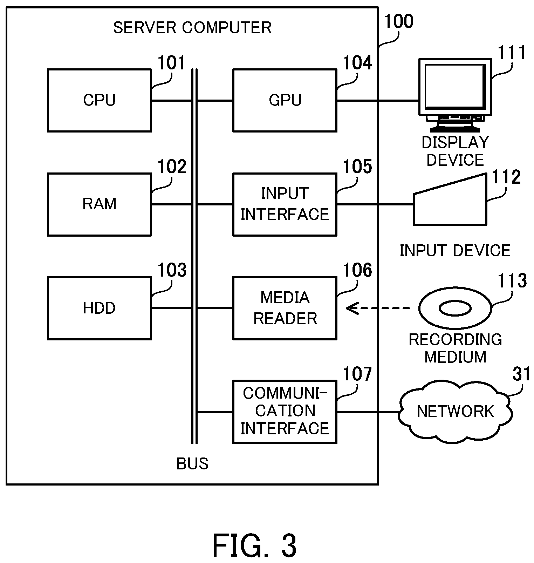

FIG. 3 is a block diagram illustrating a hardware example of the server computer. The server computer 100 includes a CPU 101, a RAM 102, an HDD 103, a GPU 104, an input interface 105, a media reader 106, and a communication interface 107. The control computer 220 and the user computer 230 may have hardware similar to that of the server computer 100. The CPU 101 corresponds to the processing unit 12 of the first embodiment. The RAM 102 or the HDD 103 corresponds to the storage unit 11 of the first embodiment.

The CPU 101 is a processor that executes instructions of a program. The CPU 101 loads a program and data stored in the HDD 103 into the RAM 102 and executes the program. The server computer 100 may include a plurality of processors.

The RAM 102 is a volatile semiconductor memory that temporarily stores a program and data. The program is executed by the CPU 101, and the data is used for computation by the CPU 101. The server computer 100 may have another type of volatile memory.

The HDD 103 is a non-volatile storage that stores software programs and data. The software includes an operating system (OS), middleware, and application software. The server computer 100 may include another type of non-volatile storage such as a solid state drive (SSD).

The GPU 104 performs image processing in cooperation with the CPU 101, and displays an image on a display device 111 connected to the server computer 100. The display device 111 is, for example, a cathode ray tube (CRT) display, a liquid crystal display, an organic electro luminescence (EL) display, or a projector.

The GPU 104 may be used as a GPGPU (General Purpose Computing on Graphics Processing Unit). The GPU 104 may execute a program in accordance with an instruction from the CPU 101. The server computer 100 may include a volatile semiconductor memory other than the RAM 102 as a GPU memory.

The input interface 105 receives an input signal from an input device 112 connected to the server computer 100, and notifies the CPU 101 of the input signal. The input device 112 is, for example, a mouse, a touch panel, or a keyboard. A plurality of input devices may be connected to the server computer 100.

The medium reader 106 is a reading device that reads a program and data from a recording medium 113. The recording medium 113 is, for example, a magnetic disk, an optical disc, or a semiconductor memory. Examples of the magnetic disk include a flexible disk (FD) and an HDD. Examples of the optical disc include a compact disc (CD) and a digital versatile disc (DVD). The medium reader 106 copies the program and data read from the recording medium 113 to the RAM 102 or the HDD 103.

The read program may be executed by the CPU 101. The recording medium 113 may be a portable recording medium. The recording medium 113 may be used for distribution of programs and data. The recording medium 113 and the HDD 103 may be referred to as a computer-readable recording medium.

The communication interface 107 communicates with the control computer 220 and the user computer 230 via the network 31. The communication interface 107 is, for example, a wired communication interface connected to a router or a switch by a wired cable.

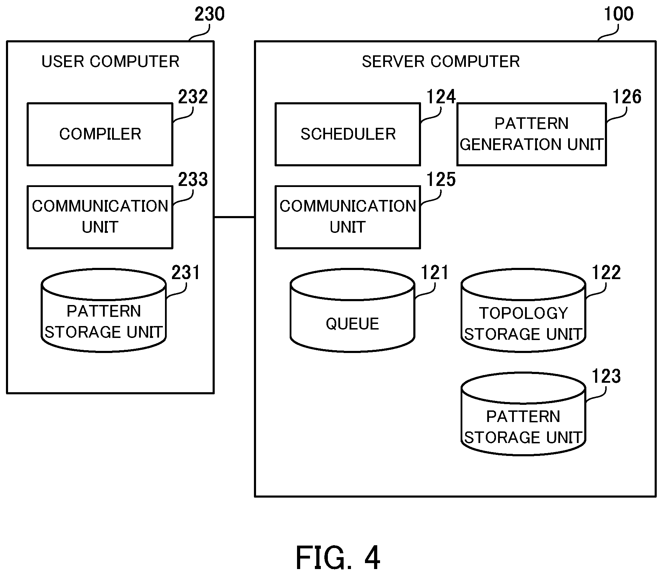

FIG. 4 is a block diagram illustrating a functional example of the user computer and the server computer. The server computer 100 includes a queue 121, a topology storage unit 122, a pattern storage unit 123, a scheduler 124, a communication unit 125, and a pattern generation unit 126. The queue 121, the topology storage unit 122, and the pattern storage unit 123 are implemented using, for example, the RAM 102 or the HDD 103. The scheduler 124, the communication unit 125, and the pattern generation unit 126 are implemented using, for example, the CPU 101 and a program.

The queue 121 stores quantum jobs waiting to be executed among the received quantum jobs. The queue 121 is a first-in first-out (FIFO) storage area and may be referred to as a waiting queue. A newly arrived quantum job is added to the end of the queue 121. The quantum job to be executed next is extracted from the head of the queue 121.

The topology storage unit 122 stores topology data indicating the topology of the QPU 211. The topology data indicates an adjacency relationship of a plurality of qubits. For example, the topology data indicates a topology in which grid points are arranged at equal intervals in a square two-dimensional area. In this case, each qubit is adjacent to four qubits at most in the vertical and horizontal directions. Typically, a two-input quantum gate is implemented between two adjacent qubits. A two-input quantum gate may be infeasible between two non-adjacent qubits.

However, even when two qubits are adjacent to each other, the execution accuracy of a quantum gate between the two qubits may be low due to defective implementation. In that case, the topology data may determine the quantum gate as a defective quantum gate and may designate the quantum gate as unusable. In the second embodiment, it is assumed that the QPU 211 has defective quantum gates at random, but the ratio of the defective quantum gates to all the quantum gates is sufficiently small.

The pattern storage unit 123 stores pattern data in which the individual number of used qubits is associated with a pattern. One pattern is uniquely selected from one number of used qubits. The individual pattern indicates the shape of an allocation area in which qubits to be used are arranged. That is, an allocation area is allocated to each quantum job, and each allocation area has a shape corresponding to the number of qubits used by its corresponding quantum job. In the QPU 211, although the specific allocation area of each quantum job is not determined until immediately before the start of execution, the shape of the allocation area is determined in advance before the quantum job arrives at the queue 121.

The scheduler 124 performs scheduling for allocating the quantum jobs waiting for execution stored in the queue 121 to the QPU 211. The scheduler 124 allows the QPU 211 to execute a plurality of quantum jobs in parallel. The scheduler 124 extracts a quantum job from the head of the queue 121, refers to the pattern data, and selects a pattern corresponding to the number of used qubits of the quantum job. The scheduler 124 allocates the qubits matching the selected pattern among the qubits included in the QPU 211 to the quantum job.

As will be described below, the scheduler 124 changes the allocation area of a quantum job being executed. The scheduler 124 detects completion of the execution of a quantum job in the QPU 211. Then, the scheduler 124 moves the quantum job being executed such that the fragmentary available qubits included in the QPU 211 are reduced. At this time, the scheduler 124 maintains the shape of the allocation area of the quantum job. As will be described below, the scheduler 124 may recompile the quantum circuit such that a defective quantum gate is avoided.

The communication unit 125 communicates with the control computer 220 and the user computer 230. The communication unit 125 transmits the pattern data to the user computer 230 in response to an access from the user computer 230. The communication unit 125 receives a quantum job from the user computer 230 and stores the quantum job in the queue 121. The communication unit 125 transmits the quantum job to be executed to the control computer 220, and notifies the control computer 220 of the allocation area determined by the scheduler 124. The communication unit 125 receives the execution result of the completed quantum job from the control computer 220 and transfers the execution result to the user computer 230.

The pattern generation unit 126 generates pattern data. The pattern generation unit 126 reads the topology data and determines a pattern for each of the plurality of numbers of used qubits according to a certain rule. At this time, the pattern generation unit 126 first generates a pattern in which the number of used qubits is 1. The pattern generation unit 126 generates a pattern in which the number of used qubits is larger by one, by adding one qubit to the previous pattern.

As a result, a pattern is generated for each number of used qubits from 1 to the total number of qubits of the QPU 211. An example of the rule for determining these patterns will be described below. The pattern generation unit 126 generates and stores the pattern data indicating the determined patterns. The pattern data may be created by an administrator of the server computer 100.

The user computer 230 includes a pattern storage unit 231, a compiler 232, and a communication unit 233. The pattern storage unit 231 is implemented using, for example, a RAM or an HDD included in the user computer 230. The compiler 232 and the communication unit 233 are implemented using, for example, a CPU and a program included in the user computer 230.

The pattern storage unit 231 stores the same pattern data as that in the pattern storage unit 123. The compiler 232 receives a quantum circuit describing quantum computation from a user. The compiler 232 compiles the quantum circuit with reference to the pattern data. The compilation will be described below. The compiler 232 receives various parameter values for causing the quantum computer 210 to execute the quantum computation from the user. The pattern storage unit 231 generates a quantum job including the compiled quantum circuit and parameter values.

The communication unit 233 communicates with the server computer 100. The communication unit 233 accesses the server computer 100 and receives the pattern data from the server computer 100. The communication unit 233 transmits the quantum job generated by the compiler 232 to the server computer 100. After the quantum job is completed, the communication unit 233 receives the execution result of the quantum job from the server computer 100. Next, compilation of a quantum circuit will be described.

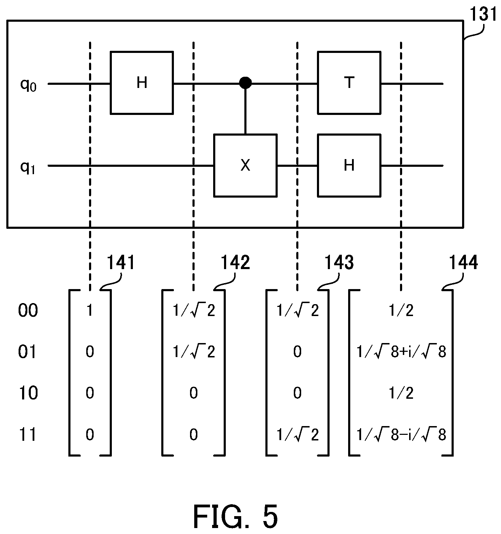

FIG. 5 is a diagram illustrating an example of a quantum circuit and a change in quantum state. In quantum computation, a quantum state $\psi$ of one qubit is expressed as a superposition of 0 and 1 as indicated in Equation (1). In Equation (1), $\alpha$ and $\beta$ are complex probability amplitudes. Therefore, the quantum state $\psi$ is represented by a complex vector formed by two complex numbers.

$$|\psi\rangle = \alpha|0\rangle + \beta|1\rangle = \begin{bmatrix} \alpha \\ \beta \end{bmatrix} \qquad\qquad (1)$$

When one qubit is measured, the information processing system stochastically acquires 0 or 1 as a measurement value. The probability that the measurement value is 0 is the square of the absolute value of $\alpha$. The probability that the measurement value is 1 is the square of the absolute value of $\beta$. It is not possible to observe $\alpha$ and $\beta$ directly. Therefore, the information processing system iteratively measures the qubit by performing quantum computation. The information processing system estimates the probability of 0 and the probability of 1 by statistically processing the measurement values.

Quantum computation using quantum gates is described by quantum circuits. A quantum circuit 131 illustrated in FIG. 5 is an example of a quantum circuit using two qubits. The quantum computation proceeds from the left to the right of the quantum circuit 131. Qubits $q_0$ and $q_1$ included in the quantum circuit 131 are logical qubits, and do not indicate specific physical qubits included in the QPU 211 at the time of creation of the quantum circuit 131. In the quantum circuit 131, H is a Hadamard gate, X is a controlled X gate, and T is a phase shift gate that rotates by $\pi/4$ around the Z axis.

Quantum gates change quantum states. Vectors 141 to 144 are four-dimensional vectors representing quantum states formed by the two qubits. The first dimension is the probability amplitude when $q_0 = 0$ and $q_1 = 0$. The second dimension is the probability amplitude when $q_0 = 1$ and $q_1 = 0$. The third dimension is the probability amplitude when $q_0 = 0$ and $q_1 = 1$. The fourth dimension is the probability amplitude when $q_0 = 1$ and $q_1 = 1$. The vector 141 represents the initial quantum state. The vector 142 represents the quantum state obtained after applying the H gate. The vector 143 represents the quantum state obtained after applying the controlled X gate. The vector 144 represents the final quantum state of the quantum circuit 131.

Various types of quantum gates are used in quantum circuits. However, there are cases in which a quantum gate that is not usable in a quantum circuit is implemented in the quantum computer 210. In these cases, the quantum circuit created by the user may be inexecutable in the quantum computer 210 as it is.

Therefore, the compiler 232 converts the quantum gate included in the quantum circuit, the quantum gate not implemented in the quantum computer 210, into native quantum gates implemented in the quantum computer 210. At this time, quantum computation equivalent to one quantum gate that is not implemented may be realized by a combination of two or more native quantum gates, and the number of quantum gates may be increased by compilation.

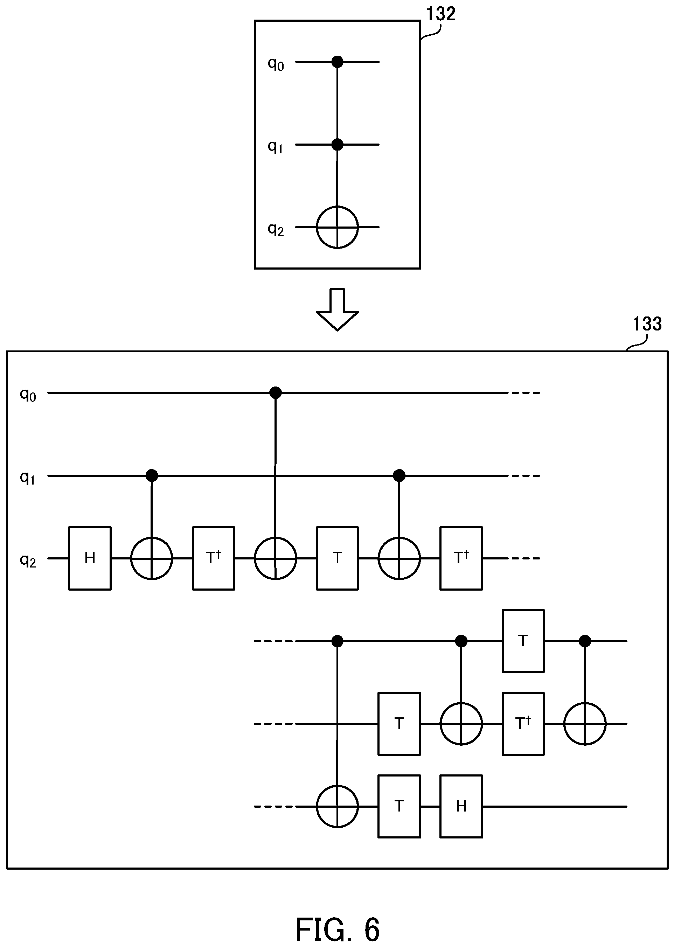

FIG. 6 is a diagram illustrating an example of conversion into a quantum circuit using native quantum gates. A quantum circuit 132 includes a 3-input CNOT gate. However, there are cases in which the quantum computer 210 does not support a multi-input quantum gate in which the number of input qubits is three or more. Therefore, the compiler 232 converts the quantum circuit 132 into a quantum circuit 133.

The quantum circuit 133 includes 15 quantum gates. In the quantum circuit 133, T† is a phase shift gate that rotates by $-\pi/4$ around the Z-axis. As illustrated in FIG. 6, the 3-input CNOT gate included in the quantum circuit 132 is expanded to a combination of H gates, T gates, T† gates, and 2-input CNOT gates in the quantum circuit 133.

When such a quantum circuit is actually executed, physical qubits included in a QPU are used. Therefore, physical qubits are allocated to the logical qubits included in the quantum circuit at least by the execution of the quantum circuit.

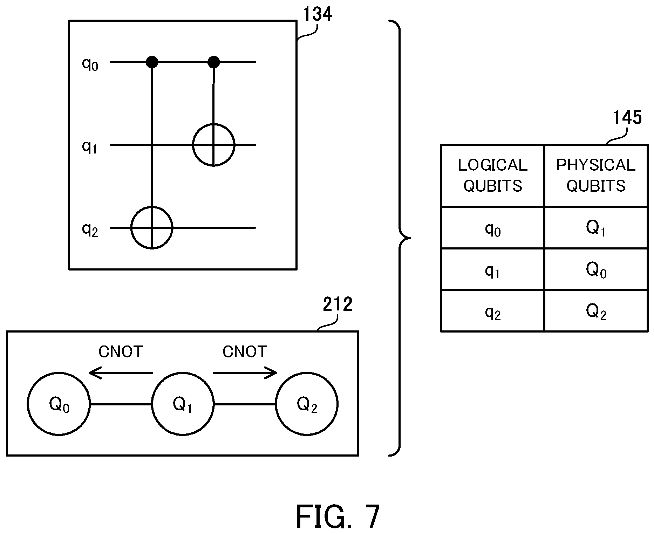

FIG. 7 is a diagram illustrating an example of allocation of physical qubits to logical qubits. A quantum circuit 134 includes qubits $q_0$, $q_1$, and $q_2$. The qubits $q_0$, $q_1$, and $q_2$ are logical qubits. The quantum circuit 134 includes two CNOT gates. A first CNOT gate uses the qubit $q_0$ as a control bit and the qubit $q_2$ as a target bit. A second CNOT gate uses the qubit $q_0$ as a control bit and uses the qubit $q_1$ as a target bit.

A QPU 212 includes qubits $Q_0$, $Q_1$, and $Q_2$. The qubits $Q_0$, $Q_1$, and $Q_2$ are physical qubits. Although a CNOT gate is implemented in the QPU 212, there is a restriction on qubits usable for the CNOT gate. The QPU 212 is able to execute a CNOT gate by using the qubit $Q_1$ as a constraint bit and the qubit $Q_0$ as a target bit. The QPU 212 is also able to execute a CNOT gate by using the qubit $Q_1$ as a constraint bit and the qubit $Q_2$ as a target bit. However, the QPU 212 does not execute a CNOT gate by using other combinations of qubits.

Depending on the correspondence relationship between the qubits $q_0$, $q_1$, and $q_2$ and the qubits $Q_0$, $Q_1$, and $Q_2$, the quantum circuit 134 may be inexecutable in the QPU 212 as it is. For example, when the qubit $Q_0$ is allocated to the qubit $q_0$, the two CNOT gates using the qubit $q_0$ as a control bit is inexecutable in the QPU 212.

Therefore, for example, as illustrated in a table 145, the logical qubits and the physical qubits are associated with each other. In the table 145, the qubit $Q_1$ is allocated to the qubit $q_0$, the qubit $Q_0$ is allocated to the qubit $q_1$, and the qubit $Q_2$ is allocated to the qubit $q_2$. Thus, the QPU 212 executes the first CNOT gate of the quantum circuit 134 as a CNOT gate in which the qubit $Q_1$ is a constraint bit and the qubit $Q_2$ is a target bit. The QPU 212 executes the second CNOT gate of the quantum circuit 134 as a CNOT gate in which the qubit $Q_1$ is a constraint bit and the qubit $Q_0$ is a target bit.

However, depending on the quantum circuit, there may be no correspondence relationship between the logical qubits and the physical qubits that enables execution of all the quantum gates included in the quantum circuit as it is. In this case, the correspondence relationship between the logical qubits and the physical qubits is changed in the quantum circuit. A change in correspondence relationship is described as a swap of the quantum states between qubits. For example, a swap gate that swaps the quantum states of two qubits is inserted in the quantum circuit.

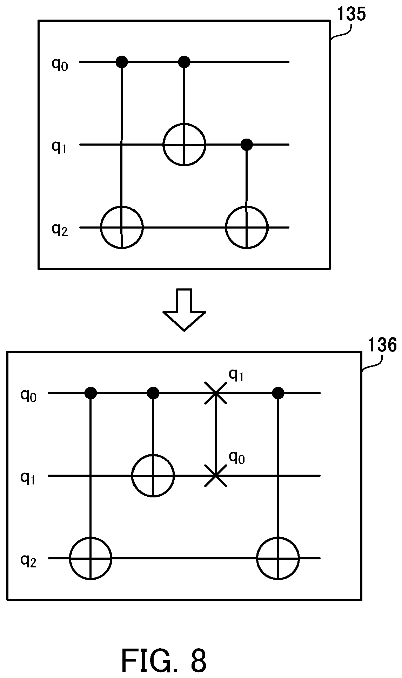

FIG. 8 is a diagram illustrating an example of routing using a swap gate. A quantum circuit 135 includes qubits $q_0$, $q_1$, and $q_2$ and includes three CNOT gates. A first CNOT gate uses the qubit $q_0$ as a control bit and the qubit $q_2$ as a target bit. A second CNOT gate uses the qubit $q_0$ as a control bit and uses the qubit $q_1$ as a target bit. A third CNOT gate uses the qubit $q_1$ as a control bit and the qubit $q_2$ as a target bit.

When the quantum circuit 135 is executed by the QPU 212, the quantum circuit 135 is converted into a quantum circuit 136. The quantum circuit 136 includes three CNOT gates and one swap gate. The swap gate is located between the second CNOT gate and the third CNOT gate. The first CNOT gate and the second CNOT gate are the same as those in the quantum circuit 135. The swap gate swaps the quantum states of the qubits $q_0$ and $q_1$. The third CNOT gate uses the qubit $q_0$ as a control bit and uses the qubit $q_2$ as a target bit.

The quantum circuit 136 is executable by allocating the qubit $Q_1$ to the qubit $q_0$, allocating the qubit $Q_0$ to the qubit $q_1$, and allocating the qubit $Q_2$ to the qubit $q_2$. However, for the quantum computation indicated by the original quantum circuit 135, the final quantum state of the qubit $q_0$ is held by the qubit $Q_0$, the final quantum state of the qubit $q_1$ is held by the qubit $Q_1$, and the final quantum state of the qubit $q_2$ is held by the qubit $Q_2$.

The allocation of the physical qubits and the insertion of a swap gate may be performed at the time of compiling the quantum circuit. However, in the second embodiment, the allocation of the physical qubits included in the QPU 211 is determined immediately before the execution of the quantum job.

In this regard, although the specific physical qubits to be used are unknown at the time of compilation, the shape of the allocation area is uniquely determined from the number of used qubits of the quantum job. The adjacency relationship of the plurality of physical qubits to be used is determined from the shape of the allocation area. Therefore, on the premise of the shape of an allocation area corresponding to the number of used qubits, the compiler 232 inserts a swap gate such that the quantum circuit becomes executable in the allocation area.

In addition to the conversion to native quantum gates and insertion of a swap gate, the compiler 232 may optimize the quantum circuit such that the size is reduced. The optimization of the quantum circuit may be performed to reduce the number of quantum gates or to reduce the depth of the quantum circuit. The depth of the quantum circuit is the number of stages of quantum gates arranged in series.

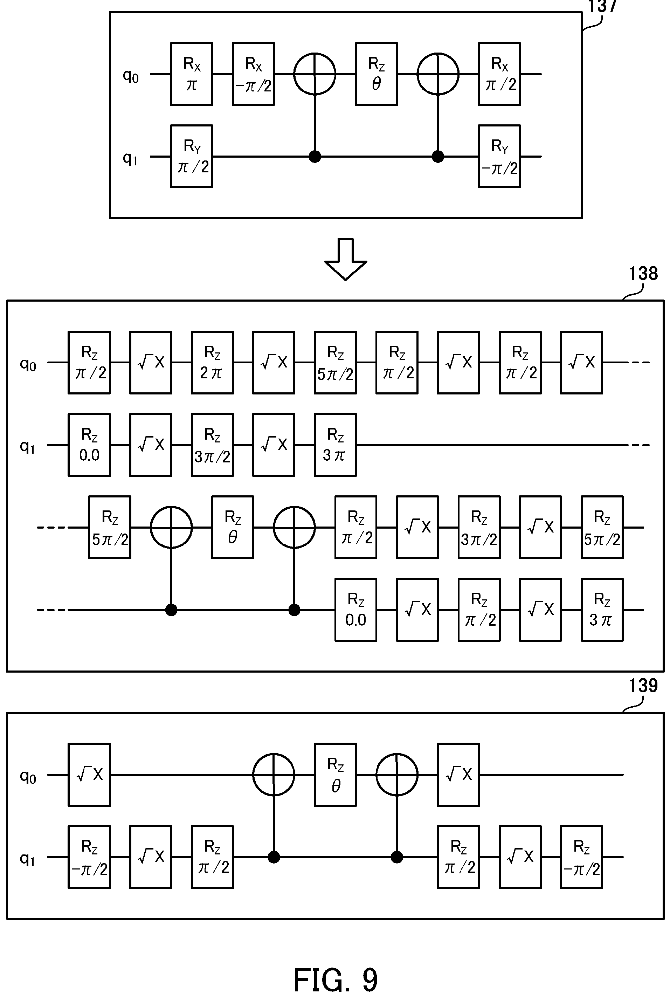

FIG. 9 is a diagram illustrating an optimization example of a quantum circuit. The compiler 232 converts a quantum circuit 137 into a quantum circuit 138 or a quantum circuit 139 by converting non-native quantum gates into native quantum gates. The quantum circuit 138 is a quantum circuit generated when optimization is not performed. The quantum circuit 139 is a quantum circuit generated when optimization is performed.

In the quantum circuits 137, 138, and 139, Rx is a rotation gate that rotates around the X axis by a specified amount. Ry is a rotation gate that rotates around the Y axis by a specified amount. $R_Z$ is a rotation gate that rotates around the Z axis by a specified amount. $\sqrt{X}$ is the square root gate for the X gate. When $\sqrt{X}$ is executed twice in succession, the same effect as that of the X gate is obtained.

The quantum circuit 137 includes six rotation gates and two CNOT gates. The depth of the quantum circuit 137 is 6. The quantum circuit 138 includes 16 rotation gates, 10 square root gates, and two CNOT gates. The depth of the quantum circuit 138 is 18. The quantum circuit 139 includes five rotation gates, four square root gates, and two CNOT gates. The depth of the quantum circuit 139 is 9. In this way, the compiler 232 is able to reduce the number of quantum gates of the quantum circuit and the depth of the quantum circuit by optimizing the quantum circuit.

Next, quantum multiprogramming will be described. Quantum multiprogramming allows parallel execution of a plurality of quantum jobs on a quantum processor.

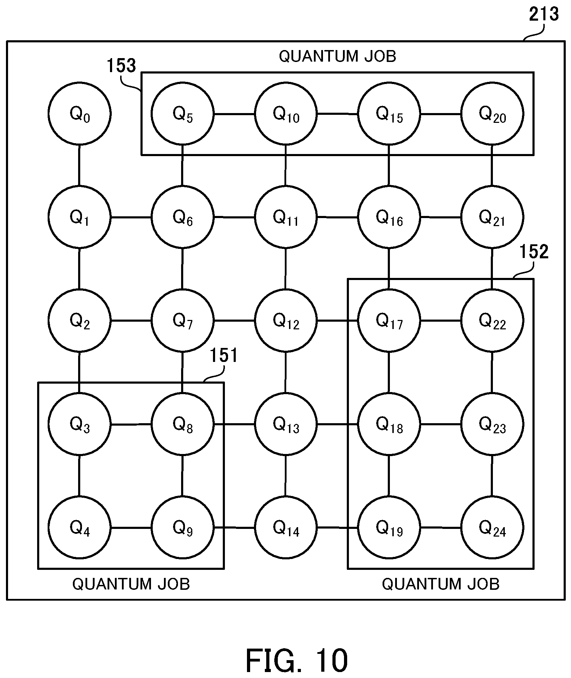

FIG. 10 is a diagram illustrating an example of parallel execution of a plurality of quantum jobs on a QPU. A QPU 213 is an example of a quantum processor included in the quantum computer 210. The QPU 213 includes 25 qubits $Q_0$ to $Q_{24}$. The 25 qubits form a 5×5 grid-like planar area. The qubits $Q_0$ to $Q_4$ are arranged sequentially from the top in the leftmost column. The qubits $Q_5$ to $Q_9$ are arranged sequentially from the top in the second column from the left. The qubits $Q_{10}$ to $Q_{14}$ are arranged sequentially from the top in the third column from the left. The qubits $Q_{15}$ to $Q_{19}$ are arranged sequentially from the top in the fourth column from the left. The qubits $Q_{20}$ to $Q_{24}$ are arranged sequentially from the top in the rightmost column.

The QPU 213 is able to execute a two-input quantum gate between qubits adjacent to each other in any one of the four directions of up, down, left, and right. However, the quantum gate between the qubit $Q_0$ and the qubit $Q_5$ is a defective quantum gate. Therefore, the two-input quantum gate using the qubits $Q_0$ and $Q_5$ is inexecutable. In FIG. 10, the edge between the qubits $Q_0$ and $Q_5$ is missing.

Quantum multiprogramming enables parallel execution of a plurality of quantum jobs on the QPU 213 by allocating non-overlapping allocation areas to different quantum jobs. As an example, quantum jobs 151, 152, and 153 are executed in parallel. A 2×2 allocation area including the qubits $Q_3$, $Q_4$, $Q_8$, and $Q_9$ is allocated to the quantum job 151. A 3×2 allocation area including qubits $Q_{17}$, $Q_{18}$, $Q_{19}$, $Q_{22}$, $Q_{23}$, and $Q_{24}$ is allocated to the quantum job 152. A 1×4 allocation area including qubits $Q_5$, $Q_{10}$, $Q_{15}$, and $Q_{20}$ is allocated to the quantum job 153.

This allows the QPU 213 to execute the quantum jobs 151, 152, and 153 in parallel, thereby improving the throughput of the quantum computer 210. Note that a scheduling algorithm for determining the allocation areas of a plurality of quantum jobs is important.

In order to compactly place as many quantum jobs as possible in the QPU 213 such that the number of available qubits is minimized, the scheduler 124 solves a combinatorial optimization problem with a large computation amount. Quantum jobs consecutively arrive at the queue 121, and a plurality of quantum jobs being executed by the QPU 213 are completed at different times. Therefore, the optimal arrangement of quantum jobs changes with the passage of time. If the shape of an allocation area allocated to a quantum job is different from an expected shape, the quantum circuit may need to be recompiled.

Therefore, in an information processing system at which quantum jobs needing a relatively short execution time consecutively arrive, a scheduling algorithm that maximizes the density of quantum jobs at one time point may be unsuitable. Therefore, the server computer 100 improves the efficiency of scheduling by limiting the patterns of the allocation areas as described below.

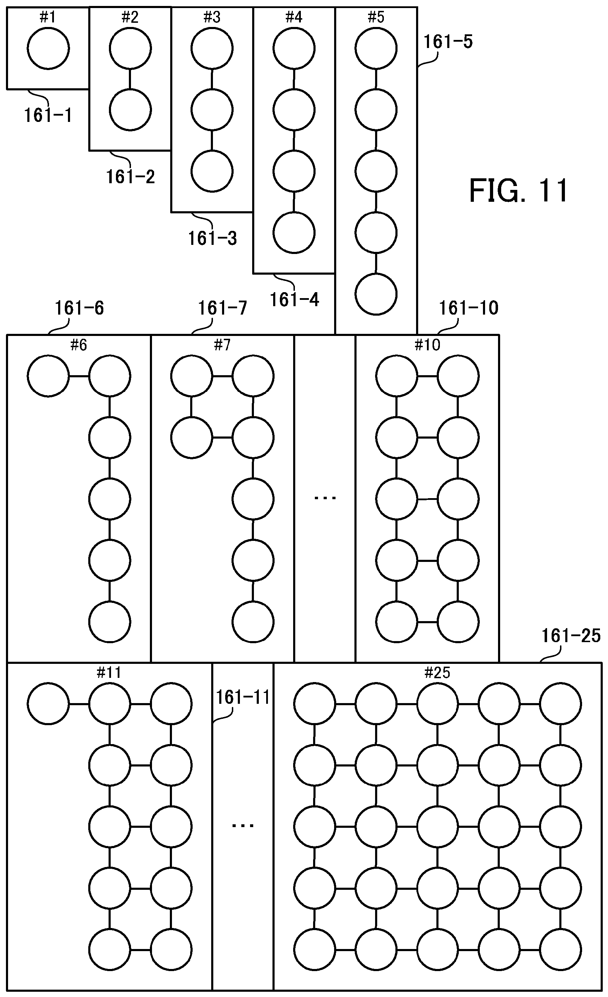

FIG. 11 is a diagram illustrating an example of patterns based on various numbers of qubits. The pattern generation unit 126 generates patterns 161-1 to 161-25 corresponding to 25 different numbers of used qubits based on the topology of the QPU 213. Here, the patterns are generated according to one example rule. Other example rules will be described below.

The pattern generation unit 126 determines the arrangement of the allocated qubits such that the number of columns of the individual allocation area is minimized. In the areas in which the number of columns is the same, the pattern generation unit 126 preferentially places the allocated qubits from the right column. For the leftmost column, the pattern generation unit 126 preferentially places the allocated qubits from the upper side. According to this rule, the pattern generation unit 126 generates the patterns 161-1 to 161-25.

The pattern 161-1 is a pattern in which the number of used qubits is 1. The pattern 161-2 is a pattern in which the number of used qubits is 2. The pattern 161-2 is generated by adding a qubit under the pattern 161-1. The pattern 161-3 is a pattern in which the number of used qubits is 3. The pattern 161-3 is generated by adding a qubit under the pattern 161-2.

The pattern 161-4 is a pattern in which the number of used qubits is 4. The pattern 161-4 is generated by adding a qubit under the pattern 161-3. The pattern 161-5 is a pattern in which the number of used qubits is 5. The pattern 161-5 is generated by adding a qubit under the pattern 161-4. As a result, when the number of used qubits is 1 to 5, the allocated qubits are arranged in one vertical column, and the allocated area falls within one column of the QPU 213.

The pattern 161-6 is a pattern in which the number of used qubits is 6. The pattern 161-6 is generated by adding one qubit to the pattern 161-5, specifically, by placing this one qubit on the left side of the first qubit indicated by the pattern 161-1. The pattern 161-7 is a pattern in which the number of used qubits is 7. The pattern 161-7 is generated by adding one qubit to the pattern 161-6, specifically, by placing the one qubit on the left side of the second qubit added in the pattern 161-2.

The pattern 161-10 is a pattern in which the number of used qubits is 10. After qubits are added in the same manner as in the pattern 161-7, the pattern 161-10 includes two columns, and in each column, five allocated qubits are vertically arranged. When the number of used qubits is 6 to 10, the allocation area falls within two adjacent columns in the QPU 213.

The pattern 161-11 is a pattern in which the number of used qubits is 11. The pattern 161-11 is generated by adding one qubit to the pattern 161-10, specifically, by placing the one qubit on the left side of the sixth qubit added in the pattern 161-6. When the number of used qubits is 11 to 15, the allocation area falls within three adjacent columns in the QPU 213. Similarly, when the number of used qubits is 16 to 20, the allocation area falls within four adjacent columns in the QPU 213.

When the number of used qubits is 21 to 25, the allocation area occupies five columns of the QPU 213. The pattern 161-25 is a pattern in which the number of used qubits is 25. The pattern 161-25 is the topology of the QPU 213 itself. In the patterns 161-1 to 161-25, there is no need to take the presence of a defective quantum gate into account.

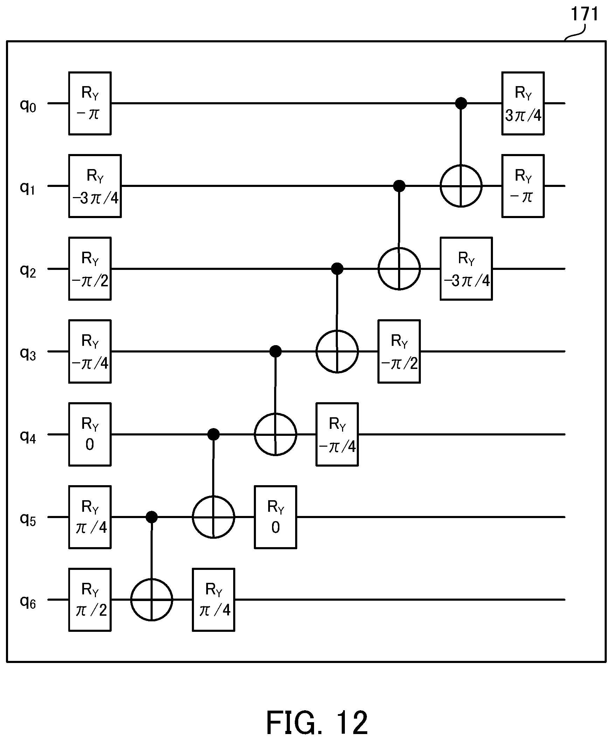

FIG. 12 is a diagram illustrating an example of a quantum circuit not compiled. A quantum circuit 171 is an example of a quantum circuit not compiled. The quantum circuit 171 includes seven qubits $q_0$ to $q_6$. The qubits $q_0$ to $q_6$ are logical qubits. The quantum circuit 171 includes 14 rotation gates and six CNOT gates.

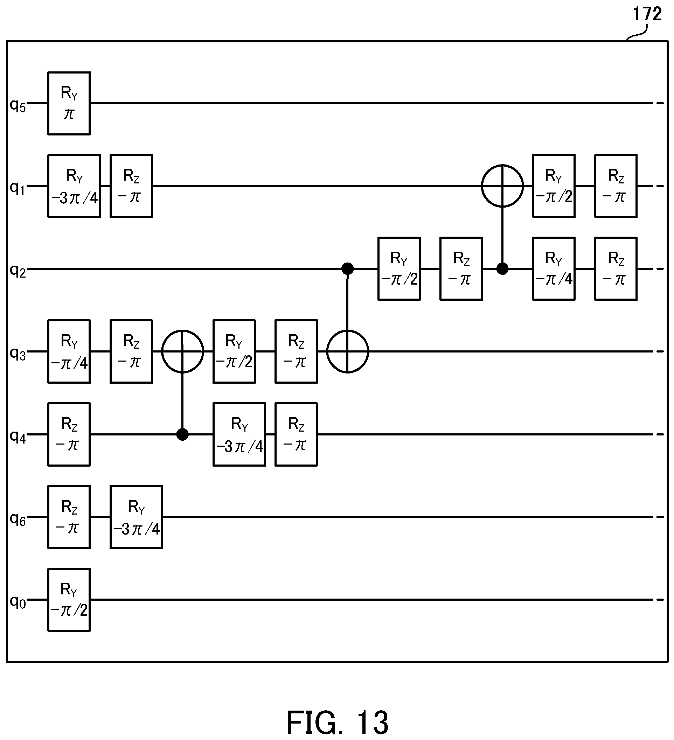

FIG. 13 is a diagram illustrating an example of the first half of a quantum circuit compiled. The compiler 232 selects the pattern 161-7 from the pattern data when the number of used qubits is 7. The compiler 232 converts the quantum circuit 171 into a quantum circuit 172 using the pattern 161-7. When the server computer 100 performs compilation, the server computer 100 selects the pattern 161-7 from the pattern data.

The quantum circuit 172 includes 28 rotation gates and six CNOT gates. FIG. 13 illustrates the first 19 rotation gates and three CNOT gates of the quantum circuit 172. The quantum circuit 172 is executable under the adjacency relationship of the seven qubits indicated by the pattern 161-7. In the compilation of the quantum circuit 171, the compiler 232 associates each of the qubits $q_0$ to $q_6$ included in the quantum circuit 171 with the relative position of one of the seven qubits included in the pattern 161-7.

The pattern data determines the relative position of each qubit by a number. For example, in the pattern data, the first qubit located at the upper right is represented by 0, and the other qubits are represented by 1, 2, ..., and 24 in accordance with the addition order described in FIG. 11. The compiler 232 reassigns the numbers of the logical qubits by using the numbers of the relative positions of the qubits included in the pattern.

For example, in FIG. 13, the qubit $q_5$ of the quantum circuit 171 is placed at the position of the qubit 0 of the pattern 161-7. The qubit $q_1$ of the quantum circuit 171 is placed at the position of the qubit 1 of the pattern 161-7. The qubit $q_2$ of the quantum circuit 171 is placed at the position of the qubit 2 of the pattern 161-7. The qubit $q_3$ of the quantum circuit 171 is placed at the position of the qubit 3 of the pattern 161-7. The qubit $q_4$ of the quantum circuit 171 is placed at the position of the qubit 4 of the pattern 161-7. The qubit $q_6$ of the quantum circuit 171 is placed at the position of the qubit 5 of the pattern 161-7. The qubit $q_0$ of the quantum circuit 171 is placed at the position of the qubit 6 of the pattern 161-7.

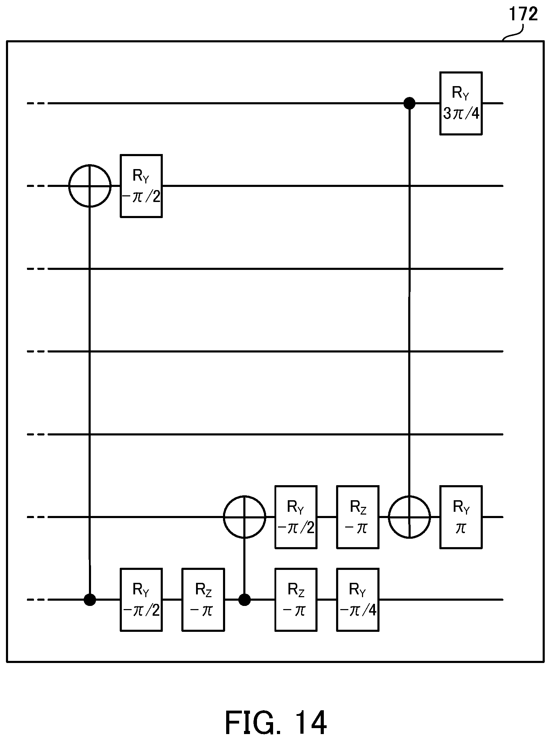

FIG. 14 is a diagram illustrating an example of the second half of the quantum circuit compiled. FIG. 14 illustrates nine rotation gates and three CNOT gates in the second half of the quantum circuit 172. Next, scheduling of a compiled quantum job according to a pattern will be described.

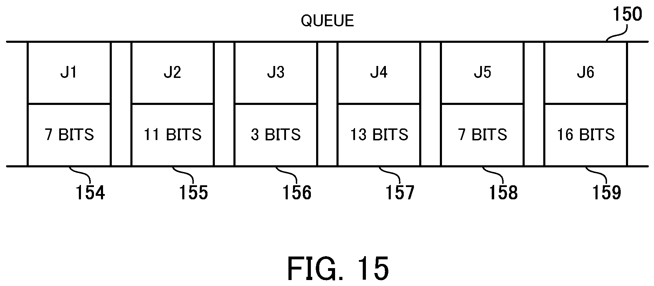

FIG. 15 is a diagram illustrating an example of a quantum job queue. As an example, a queue 150 in which quantum jobs 154 to 159 waiting for execution are stored will be described. The quantum job 154 is the first quantum job, and the quantum job 159 is the last quantum job.

The number of used qubits of the quantum job 154 is 7. The number of used qubits of the quantum job 155 is 11. The number of used qubits of the quantum job 156 is 3. The number of used qubits of the quantum job 157 is 13. The number of used qubits of the quantum job 158 is 7. The number of used qubits of the quantum job 159 is 16.

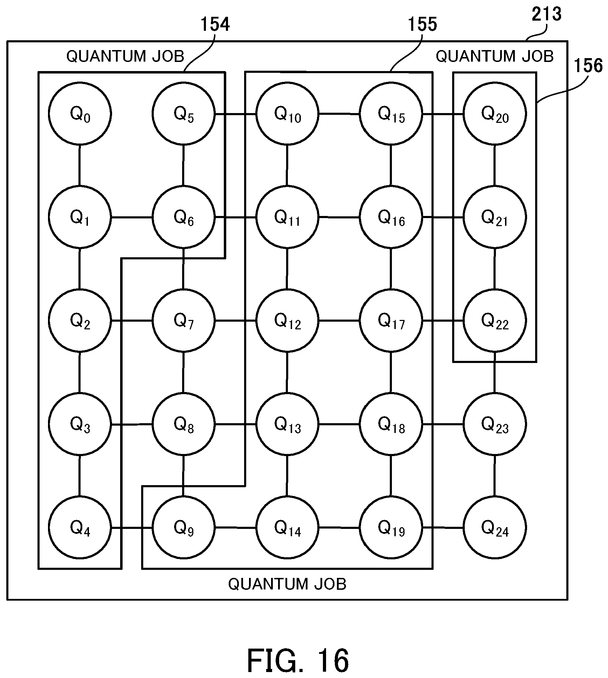

FIG. 16 is a diagram illustrating an example of allocation of a QPU area to a quantum job. The scheduler 124 extracts the quantum job 154 from the head of the queue 150. The scheduler 124 compactly places the extracted quantum job 154 in a certain direction of the QPU 213. In the second embodiment, the certain direction is the left direction. Alternatively, the certain direction may be the right direction. When the patterns are generated such that the number of columns is small, the certain direction is preferably a horizontal direction orthogonal to the columns. When the patterns are generated such that the number of rows is small, the certain direction is preferably a vertical direction orthogonal to the rows.

The scheduler 124 allocates, to the quantum job 154, an allocation area having a shape indicated by the pattern 161-7 corresponding to the number of used qubits of the quantum job 154. Thus, no matter which allocation area in the QPU 213 is allocated to the quantum job 154, recompilation of the quantum circuit of the quantum job 154 is not needed in principle.

When selecting the allocation area, the scheduler 124 allows vertical inversion and horizontal inversion of the specific shape indicated by the pattern 161-7. The scheduler 124 adopts a shape that enables compact placement most efficiently in the left direction. For example, the scheduler 124 determines four specific shapes in view of the inversion in the vertical direction and the inversion in the horizontal direction from the pattern 161-7. The scheduler 124 adopts a shape that minimizes the gap generated on the left side of the quantum job 154 when the quantum job 154 is compactly placed on the left side. The gap is a small area indicating fragmentary available qubits, and is preferably small.

In this manner, the scheduler 124 allocates a part of the qubit area of the QPU 213 to the quantum job 154. In the example in FIG. 16, the scheduler 124 performs compact placement to the left side by horizontally inverting the specific shape indicated by the pattern 161-7. As a result, the scheduler 124 allocates the qubits $Q_0$ to $Q_6$ to the quantum job 154.

Next, the scheduler 124 extracts the quantum job 155 from the head of the queue 150. The scheduler 124 determines the pattern 161-11 corresponding to the number of used qubits of the quantum job 155. The scheduler 124 vertically reverses the specific shape indicated by the pattern 161-11 and compactly places the specific shape on the left side such that the quantum job 155 does not overlap the quantum job 154. As a result, the scheduler 124 allocates the qubits $Q_9$ to $Q_{19}$ to the quantum job 155.

Next, the scheduler 124 extracts the quantum job 156 from the head of the queue 150. The scheduler 124 determines the pattern 161-3 corresponding to the number of used qubits of the quantum job 156. The scheduler 124 compactly places the specific shape indicated by the pattern 161-3 on the left side such that the quantum job 156 does not overlap the quantum job 155. As a result, the scheduler 124 allocates the qubits $Q_{20}$ to $Q_{22}$ to the quantum job 156. At this point in time, the QPU 213 has no available qubits for execution of the next quantum job 157. Therefore, the quantum jobs 157 to 159 wait in the queue 150.

In the example in FIG. 16, the scheduler 124 arranges a plurality of quantum jobs in the QPU 213 as closely as possible. On the other hand, depending on the quantum processor, noise between adjacent qubits may be large. In this case, the scheduler 124 may arrange different quantum jobs in the QPU 213 with a certain gap by interposing at least one available qubit between the quantum jobs. The gap is preferably formed by one or two available qubits.

Next, avoidance of a defective quantum gate will be described. As described above, the pattern data is generated without taking the presence of a defective quantum gate into account. Therefore, the quantum circuit is compiled on the assumption that a two-input quantum gate, which is a native quantum gate, is executable between adjacent qubits. However, there are cases in which an allocation area including a defective quantum gate is allocated to a quantum job.

For example, in FIG. 16, since the allocation area of the quantum job 154 includes the qubits $Q_0$ and $Q_5$, the allocation area includes a defective quantum gate between the qubits $Q_0$ and $Q_5$. Thus, there is a possibility that the compiled quantum circuit of the quantum job 154 is not executable in this allocated area. Therefore, for the quantum job having the allocation area including the defective quantum gate, the scheduler 124 recompiles the quantum circuit such that the defective quantum gate is not used.

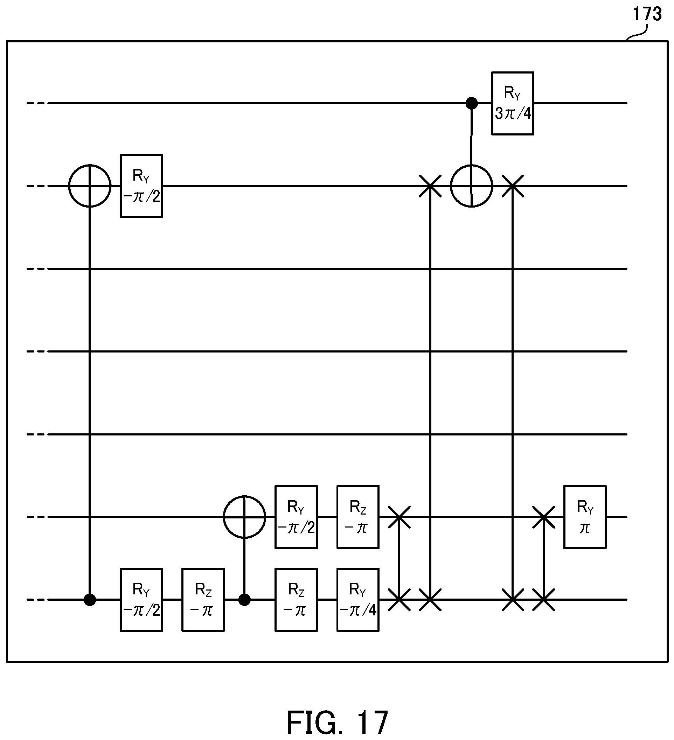

FIG. 17 is a diagram illustrating an example of recompilation of a quantum circuit. The scheduler 124 generates a quantum circuit 173 by recompiling the quantum circuit 172. FIG. 17 illustrates quantum gates in the quantum circuit 173, the quantum gates being present in the range corresponding to FIG. 14.

The scheduler 124 searches the quantum circuit 172 for a two-input quantum gate, which is a defective quantum gate, between the qubits $Q_0$ and $Q_5$. The qubits $Q_0$ and $Q_5$ correspond to the positions of the qubits 0 and 5 in the pattern 161-7. In FIG. 14, the last CNOT gate corresponds to the defective quantum gate between the qubits $Q_0$ and $Q_5$.

Therefore, the scheduler 124 inserts two swap gates before the CNOT gate and two swap gates after the CNOT gate such that the defective quantum gate is not used. The first swap gate swaps the quantum states of the qubits $Q_5$ and $Q_6$. The second swap gate swaps the quantum states of the qubits $Q_1$ and $Q_6$. Then, the CNOT gate between the qubits $Q_0$ and $Q_1$ is executed, instead of the CNOT gate between the qubits $Q_0$ and $Q_5$.

The third swap gate swaps the quantum states of the qubits $Q_1$ and $Q_6$. The fourth swap gate swaps the quantum states of the qubits $Q_5$ and $Q_6$. Thus, it is possible to avoid the CNOT gate between the qubits $Q_0$ and $Q_5$ and to obtain a computation result equivalent to that obtained in a case where the CNOT gate between the qubits $Q_0$ and $Q_5$ is executed.

Next, scheduling when one of the quantum jobs is completed on the QPU 213 will be described. The scheduler 124 detects completion of a quantum job. Then, the scheduler 124 changes the allocation area of a quantum job being executed in order to generate a large available qubit area by organizing the fragmentary available qubit areas. The scheduler 124 moves the quantum job being executed to the left in the QPU 213.

At this time, the scheduler 124 maintains the pattern of the moved quantum job. Therefore, the shape of the allocation area after the movement follows the same pattern as the shape of the allocation area before the movement. However, as in the start of execution of a new quantum job, the scheduler 124 allows vertical inversion and horizontal inversion of the specific shape indicated by the pattern. The scheduler 124 determines the movement destination by taking the vertical inversion and the horizontal inversion into account such that the number of available qubits on the left side is reduced by the moved quantum job.

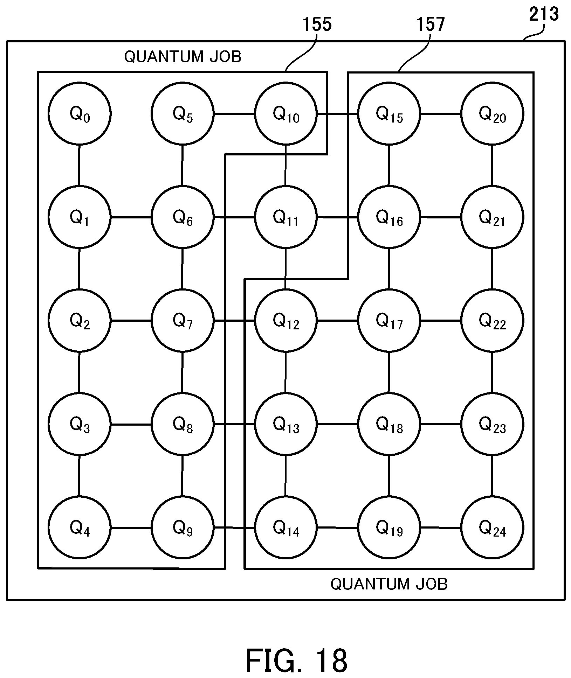

FIG. 18 is a diagram illustrating an example of a change in QPU area allocation. Here, it is assumed that the quantum jobs 154 and 156 in FIG. 16 are completed. The scheduler 124 detects completion of the quantum jobs 154 and 156. Then, the scheduler 124 moves the quantum jobs 155 in the left direction on the QPU 213. At this time, the scheduler 124 horizontally inverts the specific shape indicated by the pattern 161-11. As a result, the qubits allocated to the quantum job 155 change from the qubits $Q_9$ to $Q_{19}$ to the qubits $Q_0$ to $Q_{10}$.

Due to the movement of the quantum job 155, the qubits $Q_{11}$ to $Q_{24}$ become available qubits. Therefore, the scheduler 124 extracts the quantum job 157 from the head of the queue 150. The scheduler 124 determines a pattern corresponding to the number of used qubits of the quantum job 157. The scheduler 124 vertically reverses the specific shape indicated by the pattern and compactly places the quantum job 157 on the QPU 213 such that the quantum job 157 does not overlap the quantum job 155. As a result, the qubits $Q_{12}$ to $Q_{24}$ are allocated to the quantum job 157.

When the allocation area before the movement does not include a defective quantum gate and the allocation area after the movement includes a defective quantum gate, the scheduler 124 recompiles the quantum circuit of the quantum job. When the allocation area before the movement includes a defective quantum gate and the allocation area after the movement does not include a defective quantum gate, the scheduler 124 changes the quantum circuit of the quantum job back to the quantum circuit, which has not yet been recompiled. Therefore, when the quantum circuit is recompiled, the scheduler 124 saves the quantum circuit not yet been recompiled.

Next, another example of the pattern data will be described. Here, a case where pattern data is generated for a QPU having a 6×6 grid-shaped planar area is described.

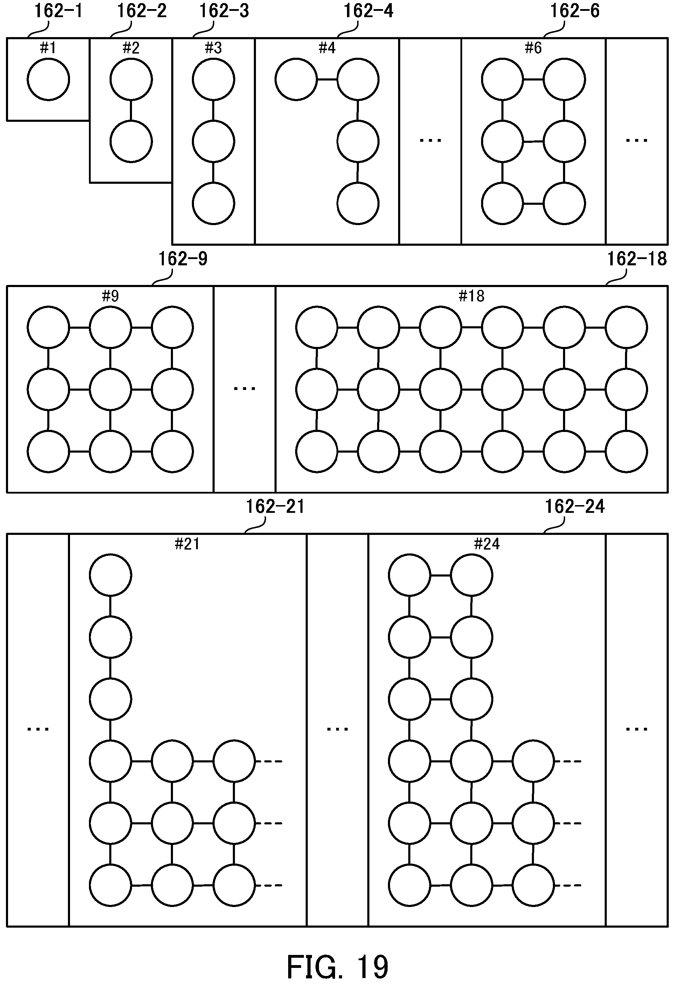

FIG. 19 is a diagram illustrating another example of patterns based on various numbers of qubits. The pattern generation unit 126 generates patterns 162-1, 162-2, and ... corresponding to the numbers of used qubits, which are 1 to 36. When the number of used qubits is between 1 and 18, the pattern generation unit 126 limits the height of the allocation area to 3. In this range, the pattern generation unit 126 generates the patterns 162-1 to 162-18 such that the number of columns is minimized. When the number of used qubits is between 19 and 36, the pattern generation unit 126 allows the height of the allocation area to exceed 3. In this range, the pattern generation unit 126 determines the arrangement of the qubits after the pattern 162-18 according to the same rule applied to the patterns 162-1 to 162-18.

The pattern 162-1 indicates one qubit. The pattern 162-2 is generated by adding one qubit under the pattern 162-1. The pattern 162-3 is generated by adding one qubit under the pattern 162-2. The pattern 162-3 indicates one column of height 3. After the pattern 162-3, qubits are sequentially added one by one from the top to the left side of the pattern 162-3 up to the pattern 162-6. The pattern 162-6 indicates two columns of height 3.

After the pattern 162-6, qubits are sequentially added one by one from the top to the left side of the pattern 162-6 up to the pattern 162-9. The pattern 162-9 indicates three columns of height 3. Similarly, after the pattern 162-9, the number of columns increases in the left direction, with the height being limited to 3, up to the pattern 162-18. The pattern 162-18 indicates six columns of height 3.

After the pattern 162-18, the number of columns does not increase, and qubits are added over the pattern 162-18, with the height being limited to 6. Up to the pattern 162-21, qubits are added one by one in the upward direction to the leftmost column of the pattern 162-18. The pattern 162-21 indicates one column of height 6 and five columns of height 3. After the pattern 162-21, up to the pattern 162-24, qubits are added one by one in the upward direction to the second column from the left of the pattern 162-21. The pattern 162-24 indicates two columns of height 6 and four columns of height 3.

In this way, patterns are generated up to the pattern corresponding to the number 36 of used qubits. The pattern corresponding to the number 36 of used qubits indicates six columns having a height of 6, and is the topology of the QPU itself. The pattern generation unit 126 may change the rule for generating the patterns according to the topology of the QPU. In particular, when the qubits included in the QPU do not form a grid, the pattern generation unit 126 may generate the patterns according to an appropriate rule according to the topology. Next, an example of a procedure of quantum job scheduling will be described.

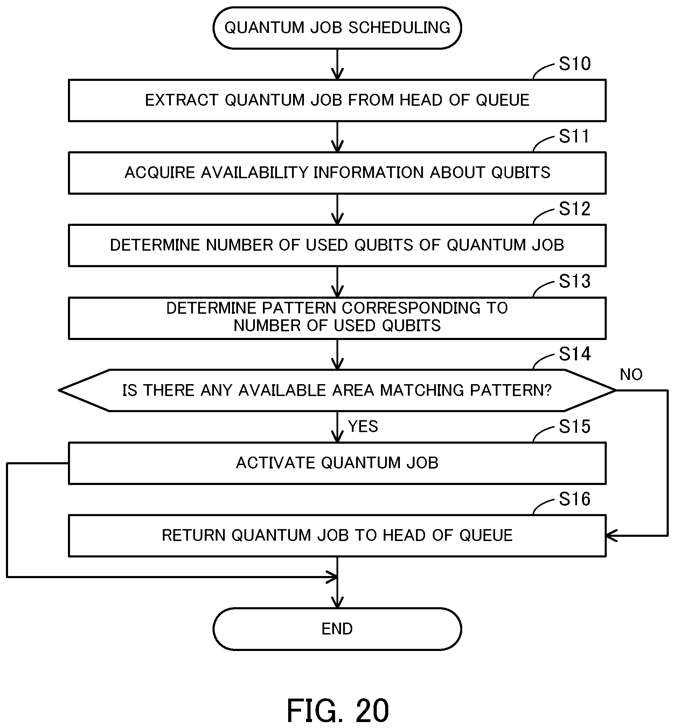

FIG. 20 is a flowchart illustrating an example of a procedure of quantum job scheduling. The flowchart of FIG. 20 is iteratively executed as long as there is a quantum job in the queue 121. In step S10, the scheduler 124 extracts one quantum job from the head of the queue 121. In step S11, the scheduler 124 acquires availability information indicating the availability status of the qubits included in the QPU 211. In step S12, the scheduler 124 determines the number of used qubits of the quantum job from the quantum circuit of the quantum job.

In step S13, the scheduler 124 determines a pattern corresponding to the number of used qubits from the pattern data generated in advance. In step S14, the scheduler 124 searches the availability information for an available area having the shape indicated by the pattern in step S13. In the search for an available area, vertical inversion and horizontal inversion of the shape indicated by the pattern are allowed. The scheduler 124 determines whether there is a matching available area. If there is a matching available area, the process proceeds to step S15. If not, the process proceeds to step S16.

In step S15, the scheduler 124 activates the quantum job. The following quantum job control to be described below is executed for each activated quantum job. The quantum job control is performed in parallel for a plurality of quantum jobs. Then, the quantum job scheduling is completed. In step S16, the scheduler 124 returns the quantum job extracted in step S10 to the head of the queue 121. Then, the quantum job scheduling is completed.

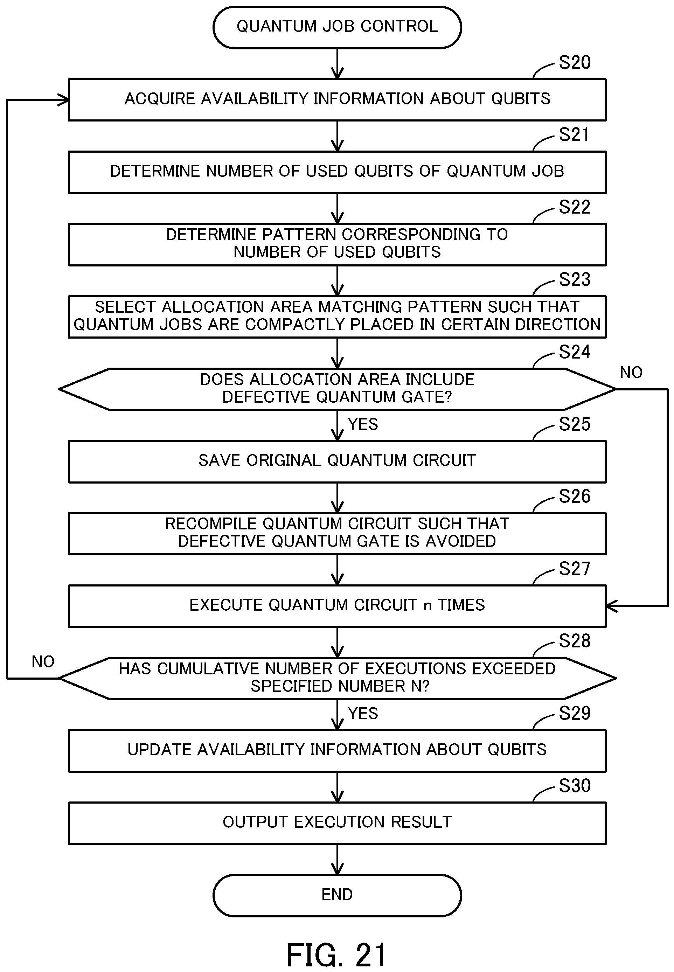

FIG. 21 is a flowchart illustrating an example of a procedure of the quantum job control. In step S20, the scheduler 124 acquires availability information indicating the availability status of the qubits included in the QPU 211. In step S21, the scheduler 124 determines the number of used qubits of the quantum job from the quantum circuit of the quantum job.

In step S22, the scheduler 124 determines a pattern corresponding to the number of used qubits from the pattern data generated in advance. In step S23, the scheduler 124 refers to the availability information and selects an allocation area having the shape indicated by the pattern such that the quantum jobs are compactly placed in a certain direction on the QPU 211. At this time, vertical inversion and horizontal inversion of the shape indicated by the pattern are allowed.

In step S24, the scheduler 124 refers to the topology data and determines whether the allocation area selected in step S23 includes a defective quantum gate. When the allocation area includes a defective quantum gate, the process proceeds to step S25. When the allocation area does not include a defective quantum gate, the process proceeds to step S27. In step S25, the scheduler 124 saves the original quantum circuit compiled by the user computer 230.

In step S26, the scheduler 124 recompiles the quantum circuit by inserting a swap gate or the like such that a defective quantum gate is avoided. In step S27, the control computer 220 causes the quantum computer 210 to execute the quantum circuit n times. If the allocation area does not include a defective quantum gate, the quantum circuit is the original quantum circuit compiled by the user computer 230. If the allocation area includes a defective quantum gate, the quantum circuit is a recompiled quantum circuit.

In step S28, the scheduler 124 acquires the number of times N specified by the quantum job. The specified number of times N is a lower limit of the number of iterations of performing quantum computation for qubit measurement, and is specified by the user in view of statistical reliability. The scheduler 124 determines whether the cumulative number of executions of the quantum circuit of the quantum job has exceeded the specified number N. If the cumulative number of executions has exceeded the specified number N, the process proceeds to step S29. If the cumulative number of executions is equal to or less than the specified number N, the process returns to step S20.

In step S29, the scheduler 124 updates the availability information held by the server computer 100 so as to reflect the selection of the allocation area for the quantum job. In step S30, the communication unit 125 receives the execution result of the quantum job from the control computer 220. The communication unit 125 transmits the execution result to the user computer 230.

As described above, the information processing system according to the second embodiment executes a plurality of quantum jobs in parallel on the QPU 211. Therefore, the qubits of the QPU 211 are effectively utilized, and the throughput of the quantum computer 210 is improved. In addition, the user computer 230 compiles the quantum circuit. Therefore, the load on the server computer 100 is reduced.

In addition, the information processing system standardizes the shape of the allocation area of a quantum job according to the number of used qubits. Therefore, the server computer 100 is able to execute scheduling for compactly placing a plurality of quantum jobs on the QPU 211 by a lightweight algorithm, and the load on the server computer 100 is reduced. In addition, the information processing system generates the patterns that define the shapes of the allocation areas according to a certain rule. Therefore, when the quantum jobs are compactly placed in a certain direction on the QPU 211, a gap is less likely to occur between quantum jobs.

In addition, for a quantum job, since an allocation area having the shape indicated by the corresponding pattern is selected, the physical qubits having the expected adjacency relationship are allocated. Therefore, even if the physical qubits to be used are not determined at the time of compilation, recompilation of the quantum circuit is suppressed. In addition, in response to completion of a quantum job, the information processing system compactly moves other quantum jobs being executed in a certain direction on the QPU 211. Therefore, a large available area is generated on the QPU 211, and scheduling of the quantum jobs waiting to be executed is facilitated.

In addition, for a quantum job for which an allocation area including a defective quantum gate has been selected, the information processing system recompiles the quantum circuit such that the defective quantum gate is avoided. Therefore, the information processing system does not need to take the presence of a defective quantum gate into account in the generation of a pattern or the selection of an allocation area, and scheduling is made more efficient. As a result, it is possible to improve the efficiency of quantum job scheduling of an information processing system at which relatively small quantum jobs consecutively arrive.

In one aspect, the efficiency of parallel execution of a plurality of quantum jobs is improved.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

1. A computer program that causes a computer to execute a process comprising:

   acquiring a first quantum job (15a) using a first number of qubits, the first quantum job having been compiled such that the first quantum job is executable in a first pattern (14a) corresponding to the first number of qubits among a plurality of patterns (14a to 14c) corresponding to a plurality of numbers of qubits, each of the plurality of patterns defining a shape of an allocation area in a qubit area (13) in which a plurality of qubits are arranged;
   moving, in response to completion of a third quantum job (15c) in the qubit area, a second quantum job (15b) to which an allocation area matching a second pattern (14b) corresponding to a second number of qubits among the plurality of patterns is allocated and which uses the second number of qubits in a certain direction on the qubit area while maintaining the second pattern; and
   allocating an allocation area matching the first pattern to the first quantum job in an available area included in the qubit area after the second quantum job is moved.

2. The computer program according to claim 1, wherein the process further includes

   transmitting pattern data (231) in which the plurality of numbers of qubits and the plurality of patterns are associated with each other to a different computer (230), and
   causing the different computer to receive the first quantum job.

3. The computer program according to claim 1 or 2, wherein

   a shape of each of the plurality of patterns (161-1 to 161-25) is defined such that a length in a first direction is equal to or greater than a length in a second direction orthogonal to the first direction, and
the second quantum job (155) is moved in the second direction.

4. The computer program according to any of the preceding claims, wherein movement of the second quantum job (155) allows inversion of a shape of a pre-movement allocation area in a first direction and inversion of the shape in a second direction orthogonal to the first direction.

5. The computer program according to any of the preceding claims, wherein the process further includes recompiling, upon detecting a defective quantum gate between two adjacent qubits ($Q_0$, $Q_5$) in an allocation area allocated to the first quantum job (155), the first quantum job such that the defective quantum gate is not used.

6. The computer program according to claim 5, wherein the recompiling includes adding a swap gate to a portion using the defective quantum gate in a quantum circuit (172) indicated by the first quantum job.

7. A quantum job scheduling method executed by a computer, the quantum job scheduling method comprising:

acquiring a first quantum job (15a) using a first number of qubits, the first quantum job having been compiled such that the first quantum job is executable in a first pattern(14a) corresponding to the first number of qubits among a plurality of patterns (14a to 14c) corresponding to a plurality of numbers of qubits, each of the plurality of patterns defining a shape of an allocation area in a qubit area (13) in which a plurality of qubits are arranged;
moving in response to completion of a third quantum job (15c) in the qubit area, a second quantum job (15b) to which an allocation area matching a second pattern (14b) corresponding to a second number of qubits among the plurality of patterns is allocated and which uses the second number of qubits in a certain direction on the qubit area while maintaining the second pattern; and
allocating, by the processor, an allocation area matching the first pattern to the first quantum job in an available area included in the qubit area after the second quantum job is moved.

8. An information processing apparatus comprising:

memory means (11) for storing a first quantum job (15a) using a first number of qubits, the first quantum job having been compiled such that the first quantum job is executable in a first pattern (14a) corresponding to the first number of qubits among a plurality of patterns (14a to 14c) corresponding to a plurality of numbers of qubits, each of the plurality of patterns defining a shape of an allocation area in a qubit area (13) in which a plurality of qubits are arranged; and
processing means (12) for moving, in response to completion of a third quantum job (15c) in the qubit area, a second quantum job (15b) to which an allocation area matching a second pattern (14b) corresponding to a second number of qubits among the plurality of patterns is allocated and which uses the second number of qubits in a certain direction on the qubit area while maintaining the second pattern and allocating an allocation area matching the first pattern to the first quantum job in an available area included in the qubit area after the second quantum job is moved.

INFORMATION PROCESSING APPARATUS 10

STORAGE UNIT 11

PATTERN

#13 14a

#11 14b

#7 14c

15a

| QUANTUM JOB | NUMBER OF QUBITS #13 |

PROCESSING UNIT 12

15c 15b

13

FIG. 1

QUBIT AREA

FIG. 2

SERVER COMPUTER
100

| CPU | 101 | | GPU | 104 |

DISPLAY DEVICE
111

| RAM | 102 | | INPUT INTERFACE | 105 |

INPUT DEVICE
112

| HDD | 103 | | MEDIA READER | 106 |

RECORDING MEDIUM
113

| COMMUNI-CATION INTERFACE | 107 |

NETWORK
31

BUS

FIG. 3

FIG. 4

$$
\begin{array}{c c c c c}
 & 141 & 142 & 143 & 144 \\
00 & \begin{bmatrix} 1 \\ 0 \\ 0 \\ 0 \end{bmatrix} & \begin{bmatrix} 1/\sqrt{2} \\ 1/\sqrt{2} \\ 0 \\ 0 \end{bmatrix} & \begin{bmatrix} 1/\sqrt{2} \\ 0 \\ 0 \\ 1/\sqrt{2} \end{bmatrix} & \begin{bmatrix} 1/2 \\ 1/\sqrt{8}+i/\sqrt{8} \\ 1/2 \\ 1/\sqrt{8}-i/\sqrt{8} \end{bmatrix}
\end{array}
$$

FIG. 5

FIG. 6

134

145

q0 ────●──────●──────

q1 ──────────⊕──────

q2 ────⊕────────────

| LOGICAL QUBITS | PHYSICAL QUBITS |
|---|---|
| $q_0$ | $Q_1$ |
| $q_1$ | $Q_0$ |
| $q_2$ | $Q_2$ |

212

CNOT   CNOT
←       →

$Q_0$ ── $Q_1$ ── $Q_2$

FIG. 7

FIG. 8

**FIG. 9**

FIG. 10

FIG. 11

FIG. 12

FIG. 13

172

FIG. 14

QUEUE

150

| J1 | J2 | J3 | J4 | J5 | J6 |
|---|---|---|---|---|---|
| 7 BITS | 11 BITS | 3 BITS | 13 BITS | 7 BITS | 16 BITS |

154　　　155　　　156　　　157　　　158　　　159

# FIG. 15

FIG. 16

FIG. 17

FIG. 18

FIG. 19

QUANTUM JOB SCHEDULING

EXTRACT QUANTUM JOB FROM HEAD OF QUEUE  S10

ACQUIRE AVAILABILITY INFORMATION ABOUT QUBITS  S11

DETERMINE NUMBER OF USED QUBITS OF QUANTUM JOB  S12

DETERMINE PATTERN CORRESPONDING TO
NUMBER OF USED QUBITS  S13

IS THERE ANY AVAILABLE AREA MATCHING PATTERN?  S14  NO

YES

ACTIVATE QUANTUM JOB  S15

RETURN QUANTUM JOB TO HEAD OF QUEUE  S16

END

FIG. 20

```
        ┌──────────────────────────┐
        │   QUANTUM JOB CONTROL    │
        └──────────────────────────┘
                     │
                     ▼                              S20
   ┌─────────────────────────────────────────────────┐
   │   ACQUIRE AVAILABILITY INFORMATION ABOUT QUBITS  │
   └─────────────────────────────────────────────────┘
                     │                              S21
                     ▼
   ┌─────────────────────────────────────────────────┐
   │   DETERMINE NUMBER OF USED QUBITS OF QUANTUM JOB │
   └─────────────────────────────────────────────────┘
                     │                              S22
                     ▼
   ┌─────────────────────────────────────────────────┐
   │   DETERMINE PATTERN CORRESPONDING TO            │
   │   NUMBER OF USED QUBITS                          │
   └─────────────────────────────────────────────────┘
                     │                              S23
                     ▼
   ┌─────────────────────────────────────────────────┐
   │ SELECT ALLOCATION AREA MATCHING PATTERN SUCH THAT│
   │ QUANTUM JOBS ARE COMPACTLY PLACED IN CERTAIN     │
   │ DIRECTION                                        │
   └─────────────────────────────────────────────────┘
                     │                              S24
                     ▼                                      NO
   <  DOES ALLOCATION AREA INCLUDE DEFECTIVE QUANTUM GATE? >──┐
                     │ YES                         S25        │
                     ▼                                        │
   ┌─────────────────────────────────────────────────┐       │
   │   SAVE ORIGINAL QUANTUM CIRCUIT                  │       │
   └─────────────────────────────────────────────────┘       │
                     │                              S26       │
                     ▼                                        │
   ┌─────────────────────────────────────────────────┐       │
   │   RECOMPILE QUANTUM CIRCUIT SUCH THAT            │       │
   │   DEFECTIVE QUANTUM GATE IS AVOIDED              │       │
   └─────────────────────────────────────────────────┘       │
                     │                              S27       │
                     ▼                                        │
   ┌─────────────────────────────────────────────────┐◄──────┘
   │   EXECUTE QUANTUM CIRCUIT n TIMES               │
   └─────────────────────────────────────────────────┘
                     │                              S28
       NO            ▼
   ┌──< HAS CUMULATIVE NUMBER OF EXECUTIONS EXCEEDED SPECIFIED NUMBER N? >
   │                 │ YES                          S29
   │                 ▼
   │  ┌─────────────────────────────────────────────────┐
   │  │   UPDATE AVAILABILITY INFORMATION ABOUT QUBITS  │
   │  └─────────────────────────────────────────────────┘
   │                 │                              S30
   │                 ▼
   │  ┌─────────────────────────────────────────────────┐
   │  │   OUTPUT EXECUTION RESULT                        │
   │  └─────────────────────────────────────────────────┘
   │                 │
   │                 ▼
   │        ┌──────────────┐
   │        │     END      │
   │        └──────────────┘
   └─(back to S20)
```

## FIG. 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020108993 A
- WO 2020056176 A
- WO 2022217823 A
- US 20230102347
- US 20230186130